# EUROPEAN PATENT APPLICATION

(11) **EP 4 404 175 A1**
(43) Date of publication of application: **24.07.2024**
(21) Application number: 24152581.5
(22) Date of filing: 18.01.2024
(51) Int. Cl.: G09B 7/04, G06F 3/0482, G09B 11/10

(54) **DEVICES, SYSTEMS AND METHODS FOR TEACHING THE CREATION OF AN OBJECT OF THE VISUAL ARTS**

(30) Priority: 18.01.2023 IL 30002823
(71) Applicant: Joytunes, Ltd., 6701457 Tel Aviv (IL)
(72) Inventor: HARRY, Tomer, Tel Aviv (IL); KALUGNY, Yuval, Tel Aviv (IL); ZEWI, Oded, Tel Aviv (IL); DOVRAT, Tamar, Tel Aviv (IL); PELED, Gil Jacob, 6701457 Tel Aviv (IL)
(74) Representative: Kasche & Partner

(57) **Abstract**

Embodiments pertain to a system for providing a user with a lesson for creating an object of the visual arts. The system may include at least one processor; and at least one memory configured to store data and software code portions executable by the at least one processor to allow the execution of the following steps: receiving an image of at least one user-created intermediate artwork and/or assistive feature relating to an artwork. The steps may further include analyzing the image of the at least one intermediate artwork and/or assistive feature; and providing feedback on the at least one intermediate artwork and/or assistive feature.

## Description

### BACKGROUND

Increased Internet penetration, smartphones and tablets in the modern and emerging economies are boosting the growth of the online drawing and/or painting learning market, as an alternative to the traditional personal one-on-one drawing or painting lessons. Various online courses and individual lessons that offer enhanced drawing and/or painting lessons are provided through applications for mobile phones and tablets, typically based on Windows, iOS, Android, and MacOS platforms. In addition to the reduced costs, such online drawing/painting learning provides an interactive and fun experience, while providing more flexibility and being less bound by location and time, compared to personal-based tutoring.

### BRIEF DESCRIPTION OF THE DRAWINGS

The figures illustrate generally, by way of example, but not by way of limitation, various embodiments discussed in the present document.

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. References to previously presented elements are implied without necessarily further citing the drawing or description in which they appear. The number of elements shown in the Figures should by no means be construed as limiting and is for illustrative purposes only. The figures are listed below.
**Figure 1** is a schematic illustration of a visual arts creation teaching system, according to some embodiments.
**Figure 2** is another schematic illustration of the visual arts creation teaching system, according to some embodiments.
**Figures 3A-3D** are screenshots of a "shading" Skill Spotlight (SSL), according to some embodiments.
**Figures 4A-4D** are screenshots of a "perspective drawing" SSL, according to some embodiments.
**Figures 5A-5D** are screenshots of a "reflections drawing" SSL, according to some embodiments.
**Figure 6** is a flowchart of a method for teaching a user one or more skills relating to the creation of an object of the visual arts, according to some embodiments.
**Figures 7A to 7E** show images of intermediate stages for creating artwork, according to some embodiments.
**Figure 8A** shows an image of a wrongly drawn assistive feature, according to some embodiments.
**Figure 8B** shows a system-inferred artwork creation, based on the assistive feature of **Figure 8A****,** according to some embodiments.

### DETAILED DESCRIPTION

Aspects of the present invention pertain to system, devices, and/or methods for interactively tutoring visual arts including, drawing, painting, sculpturing, ceramics, and/or the like.

Wherever applicable, the term "a user" or "the user" may refer to one or more users, which may be a person engaging in the visual arts such as, for example, a student, an illustrator, draftsperson, painter, and/or sculptor.

The expression "drawing and/or painting" may herein be referred to as "drawing/painting".

In some embodiments, a computerized system for interactively tutoring or teaching a user visual arts may be configured to present the user with at least one instruction for guiding the user how to create an object (also: work) of the visual arts, and displaying a first image of a source reference visual arts object to be created or for creation by the user.

It is noted that expressions "displaying" and "presenting", as well as grammatical variations thereof, may herein be used interchangeably.

In some embodiments, the system may instruct the user to recreate a copy version of the source reference visual arts object as faithfully as possible (also: to create a desired target copy version). The user may then be instructed to take a picture of the user-created copy version of the source reference version, optionally by employing a dedicated image acquisition interface. The user-created copy of the reference version may then be automatically evaluated by the system which may afterwards provide corresponding feedback to the user.

In some examples, the user-created version may be a physical copy (as opposed to a digital one), using e.g., pencil and paper, of the source reference visual arts object.

In some examples, the user-created version may be directly digitally created by employing a digital stylus.

In some embodiments, the system may be configured to instruct the user to create a target (e.g., copy) version of an source reference visual arts object (also: artwork) displayed to the user, wherein the target copy version is different in at least one aspect from the reference visual arts object. The at least one aspect or characteristic may pertain to lighting direction, vantage points or perspective angle, symmetry axis, and/or the like. Accordingly, the at least one aspect may require the user to provide shading from a different direction; draw symmetry along a different axis; draw the same 3-D object from a different perspective, and/or the like.

The system may further be configured to capture or acquire image descriptive of at least one user-created copy version of the target copy version, and compare image data descriptive of one or more user-created copy versions with image data descriptive of a reference target version (also: expected reference-copy) (and/or any other reference or reference criterion) to provide, based on the comparison thereto, feedback to the user.

It is noted that the expression "acquiring an image" and "capturing an image" as well as grammatical variations thereof, may pertain to acquiring a still image to produce image data; to the capturing of a sequence of still images, for example, to produce a video stream and/or to the capturing of inputs generated by a hand-held pointing device (e.g., digital stylus and/or pen), a stylus pens for touchscreens; gesture-based input, and/or the like.

Image data of a target reference version of the artwork may differ in at least one aspect compared to the image data of the source reference version of the artwork displayed to the user.

It is noted that the reference target version may be one of many examples of a reference criterion based on which feedback may be provided to the user. In some embodiments, example target references may also pertain to target parameter values (e.g., including related thresholds) relating to a specific theme and/or artist's style, which may be employed for comparison against a free-form user-created object to provide related feedback, e.g., regarding a degree of correspondence of the free-form user-created object with respect to the reference criterion.

It is noted that the expression "reference version" pertains to a digital representation of a reference version.

In some examples, parameter values of a reference target and of a reference source may be identical or non-identical.

In some embodiments, the target reference version of the visual arts object may be obtained by applying transformation on the source reference visual arts object.

In some embodiments, visual art objects produced by the user may be captured by one or more cameras (as an example of a device-based sensor) to generate image data inputs for analysis by the system.

For the purpose of capturing or acquiring image data descriptive of the at least one user-created copy version, the system may for example be configured to provide for the user an image capturing interface, which may utilize a built-in camera apparatus of the device used by the user. In some embodiments, the image capturing interface may include automatic recognition of the region in the field of view of the camera in which the user's created copy or copies are presented. The image capturing interface may be further configured to allow the user to adjust the area or region in which the at least one copy is present, to create a finalized image captured or to be captured through the interface and submitted for receiving feedback.

In some embodiments, image data of the target (also: expected) reference version may be generated by applying on the image data of the source reference version, for example, interpolation of initial 2D images to 3D objects, automatic coloring, and/or by changing other characteristics relating to the image data of the source reference version, automatic shading in various gradient levels and directions; automatic transformation from one drawing style to another (e.g. smooth lines to pointillism); simulated 3D rotations of the object in various angles; automatic change in some or all line thickness; automatically imposing some pattern on some sub-area of the drawing.

In some embodiments, image data of the source reference version may be stored in the system in association with image data of the target reference- version.

Feedback can be provided in various manners including, for example, as auditory feedback, visual feedback, spoken feedback, e.g., selected from a pre-prepared arrangement of possible responses, and/or haptic feedback (e.g., via tablet displays, computer monitor displays, Smartphone displays, Virtual Reality Displays, Augmented Reality Displays, Mixed Reality Displays).

Information relating to artwork that is input to and/or acquired by the system may be of various types including, for example, auditory, visual (e.g., images, gestures), vocal, haptic and/or through data transmission, e.g., from other devices. Information may be provided, for example, via tablet displays, computer monitor displays, Smartphone displays, Virtual Reality Displays, Augmented Reality Displays, Mixed Reality Displays.

Feedback can for example include information about corrective actions to be undertaken or that can be undertaken by the user to improve his/her skill in the execution of a visual artform, an overlay of the target reference over the image data of the user's created copy in areas where they significantly differ, a numerical score corresponding to the user's level of success in recreating the target reference, specific recommendations how to improve characteristics of an artistic feature, an inferred or predicted prospective artwork, and/or some other similar form of feedback.

The term "infer" as used herein, as well a grammatical variations thereof, may encompass the meaning of "deriving", or "determining an estimate", or "estimate" information based on reference information.

The system may be configured to provide automatic feedback to the user for their achieved results in executing a skill in relevant stages over the course of study. The feedback may be given after the user has finished their work on a particular drawing and/or creation of any other object in the visual arts, based on an image of the user-created visual art object.

In some examples, the system may be configured to determine, based on the comparison, a skill level of the user with respect to the at least one artistic skill.

For example, the system may be configured to determine a first skill level value associated with a person or user identifier relating to a user of the system, for example, based on digital representation of a first user-created object or work of visual art. The system may further be configured to select, in accordance with the first skill level value, instructions to the user for creating a desired target reference visual arts object. The system may then prompt the user to create the (e.g., desired) target reference visual arts object.

The system may then be employed for capturing a user-created version of the target reference visual arts object to generate a digital representation of the user-created version. The system may then compare the digital representation of the user-created version against at least one reference criterion (e.g., threshold) relating to one or more characteristics of the target visual arts object. The system may update, based on the comparison, the skill level value associated with the person identifier, e.g., depending on the level of correspondence between the digital representation of the user-created version and data descriptive of characteristics of the target visual arts object. In some examples, feedback may be provided with respect to distinct characteristics of the user-created version. In some examples, feedback may be a global score relating to a plurality of characteristics of the user-created version. It is noted that the expression "adapting the skill level value" may also include "keeping the same skill level value", if the comparison yields a corresponding result.

In some embodiments, the system may include a recommendation and/or evaluation engine configured to provide feedback and/or determine a skill level value with respect to a user-created artwork version and/or user-created feature of the artwork. The engine may take into consideration user-submitted and/or user-inferred (i.e., explicit and/or implicit) preferences for providing the feedback and/or for determining the skill level value.

The at least one instruction pertains to improving skill level with respect to at least one of the following visual art characteristics such as drawing-related skills such as line drawing, hatching, crosshatching, random hatching, shading, contour shading, scribbling, stippling, and/or blending; and/or painting-related skills such as brush techniques. Additional and/or alternative artistic skills may include and/or pertain for example to Symmetry, mirroring, Realism, Drawing expressions, accuracy in patterns / textures, accuracy in contour, Shapes, Visual effects (e.g. impression of movement, connection between materials/elements), Proportions, perspective, profile drawing, 3D visualization, Composition, Concept, Drawing from observation, Negative space, Artistic style, Pointillism, Circulism, Coloring and tones, Sfumato, and/or Line Work / Line quality.

In some embodiments, the system may include a library of courses. Some courses may be associated or linked with each other by the fact that different courses are aimed at improving a certain skill for the creation of visual artwork. The courses may tutor or provide one or more exercises related to the certain skill. For instance, various first exercises that are aimed at improving shading skills may be associated with a first group of courses, and various second exercises that are aimed at improving contouring skills may be associated with a second group of courses. In the discussion that follows, different exercises that are aimed at improving a certain skill may herein be referred to as Skill Spotlight (SSL) exercises.

For example, for a "shading SSL", the system may display the user an image of an source reference visual arts object shaded as lit from a first direction, and then instructed to create a drawing (user-created copy version) of the same object as if it was lit from a second direction, different from the first direction, and so having a different shading than the displayed image. Similarly, in a perspective SSL, a learner may be presented with an image of an source reference 3D object from a first angle, and instructed to draw a target copy version of the object from a second angle that is different from the first angle for comparison purposes of the user-created target version against an target reference version of the source reference visual arts object.

In some examples, the at least one different aspect pertains to one of the following: lighting conditions of the object, perspective, directionality of objects, symmetry axes, relative separation of features, line thickness, line style; or any combination of the above-mentioned aspects or similar ones.

In some embodiments, comparing data descriptive of one or more user-created copy versions with data descriptive of the target expected reference copy version may include determining a level of correspondence estimate between image data of the one or more user-created copy versions and image data of the target reference version of the visual artwork.

The system may be configured to provide feedback relating to the determined level of correspondence estimate.

In some embodiments, feedback may relate to the user's creation of a visual arts object (also: "performance"), and/or to a plurality of visual arts objects created by the same user. In some examples, the system may include connecting the user to human teacher feedback, or other user feedback (by transmitting images of user-created visual art objects to a third party to obtain feedback from the third party, offline and/or online, e.g., in real time or substantially in real time).

In some embodiments, feedback may be provided according to prioritization (e.g., weighting) based on artwork-related parameter values, a ranking of specific skills, user submitted preferences, or some other method.

For example, hatching, crosshatching, random hatching, shading, scribbling, stippling, and/or blending; and/or painting-related skills such as brush techniques may each be associated with a priority level value (PLV), and the system may provide feedback accordingly.

For example, if providing feedback relating to a first visual artistic skill is prioritized (e.g., weighted) higher than providing feedback to a second visual artistic skill, then the system may initially provide the user with first feedback to correct for deviations from a desired first visual artistic skill, and later provide a second feedback to corrected for deviations from a desired visual artistic skill. In some examples, the second feedback may only be provided if the user's performance relating to first visual artistic skill exceeds a threshold relating to an accuracy requirement. A first visual artistic skill may for example relate to shading, and a second first visual artistic skill may for example relate to contour accuracy.

In some embodiments, feedback may focus on key properties or elements of the learner's drawing with respect to the intended SSL exercise, as opposed to ranking the entire drawing as a whole.

In some embodiments, feedback may be quantitative, qualitative, or a combination of the two. Feedback may for example be provided in the form of a score derived from the ranking generated by the system for the user-created visual artwork object; generalized feedback on specific features (e.g. "the gradient is too sharp", "the shape is not symmetrical"); annotations, lines and/or arrows presented on top of the image of the user-created object in the system's user-interface; or any of the above.

In some embodiments, feedback may also be given cumulatively at the end of courses or periods of use in the application. Such cumulative feedback may include a qualitative assessment of the strengths and weaknesses of the learner's work over the length of the course, and suggest emphasizing work on specific skills or drawing methods.

In some embodiments, the system may be configured to automatically, or semi-automatically prioritize the feedback to the user, based on the user's performance.

For example, the system may detect characteristics relating to the user's performance and prioritize, based on the detected characteristics, the characteristics for which corrective actions should be undertaken. In some embodiments, the prioritization of the feedback may be user-configurable or user-selectable. In some examples, prioritization may be based on earlier indications (e.g., from the user) with regards to specific skills in the execution of visual arts they would like to improve in.

Reference images of objects of the visual arts may be presented to the user in many ways including, for example, as visually, auditory, tactile, haptic, through a virtual reality presentation, and/or through an augmented reality presentation. In some examples, the system may allow generating different user-profiles and associate different visual art preferences (e.g., theme, art period, style, etc.) to each profile depending, for example, on gender, age, gender, user preferences, a current skill level, skill level, and/or the like.

In some embodiments, the user-preferences may be any one or more of the following: predetermined preferences, general preferences, previously stored user preferences, and/or parameters values determined by the application. Preferences may include, for example, a user's preferred artistic theme, user's age, device hardware and/or software configurations. Preferences or configurations may in some examples be crowdsources. In some examples, initialization may be executed the first time the user uses the system, or per user request and/or prompt. In some examples, subsequent application initialization may include loading of previously determined or selected parameters values relating to user preferences and/or device configuration.

It is noted that the presentation of a reference visual arts object is entirely optional, and the user or users may produce a user-created visual art object which may then be evaluated by system, e.g., in accordance with one or more qualitative and/or quantitative criteria. The one or more qualitative and/or quantitative criteria may be user-configurable, automatically and/or semi-automatically selected by the user.

For example, a user may be given an open-ended prompt to create original art in the theme (e.g., style, artist) of the relevant course (e.g., "Cubism" theme, "Van Gogh" Theme), without the use of a specific reference example. The user may then be prompted to embed and/or adopt a selected specific theme artist's style into the user's (also: original) creation. Upon completion of the creation of an original visual arts object in accordance with one or more selected themes, the system may automatically evaluate an image representation of the original visual arts object and provide automated feedback, for example, about a level of correspondence with the selected theme. The system may, for example, utilize a ranking of the similarity of the drawing with respect to the style of the selected theme (e.g., artist, style).

In some embodiments, based on the user's performance, the system may display to the user alternative source reference visual arts objects for creation by the user and/or suggest additional and/or alternative visual art styles and/or visual art themes, and/or exercises, and/or courses, etc.

It is noted embodiments discussed herein with respect to user-selections and/or user-configuration, may also include third-party user user-selections and/or configurations. For example, not only a user creating visual arts may be operable to make selections, configurations, set preferences, and/or the like, but also another "third-party" user (e.g., another performer and/or teacher) may suggest and/or define selections, configurations and/or preferences. Such other user may set configurations, etc., from remote, by logging into a session and/or a profile of the first user, e.g., subject to the first user's authorization.

In some embodiments, the system may automatically determine (e.g., select) the source reference visual artwork to be presented or for presentation to the user.

In some embodiments, the user may select which information related to visual arts is to be presented by the system and which not. In some embodiments, the system may present the user with various user-selectable visual arts-related configurations. In some embodiments, the presentation of information with respect to an object of visual art may be user-configurable while the user is creating a copy version of the related visual art.

In some examples, the system may automatically, randomly, pseudo-randomly, adaptively or dynamically, discard or remove parts and/or add information relating an object of visual art to be created by the user, e.g., based on a current level of a user to execute a certain skill, and/or a rate of change of the user's level.

In some embodiments, an image of a user-created copy of the target version may be processed prior to comparison with image data of a (e.g., desired) target reference version of an object of visual art. Pre-processing may for example include cleaning image background noise, image foreground noise (e.g., from the adjusting light levels, cleaning noisy data from the imaged sheet of paper onto which the user created the user-created copy of the target version of the reference image; reducing unintended shadows or shading gradients (due to occlusion from the device or hands, uneven lighting etc.); removing or reducing geometric distortions due to camera angle; detection of distinct objects, their sizes, edges etc. in the image; detection and subsequent correction of blurring, distortion and/or low resolution of drawing within the image; and/or detection and removal of image artifacts.

In some embodiments, the processing of an acquired user-created copy of an object of visual art may be employed in conjunction with specific UX elements and prompts aimed at assisting the automatic image analysis with user-intervention. These prompts may include: alerting the learner to uneven or difficult lighting conditions; detecting significant shadows falling on the object and prompting the learner to avoid them; prompting the user to add specific markers to their drawing to assist in removing distortions; prompting the user to position a UI box around the object with minimum background, possibly in combination with object detection with creator validation (e.g., presenting a detection box to the learner and requesting confirmation that it includes their drawing); alerting the user to lack of focus and/or low detail of the acquired image; or any combination of the above. These prompts may appear online (while the user is in the process of taking the image) and/or offline (after the user has acquired the image of the user-created copy visual art object, possibly leading to taking one or more additional images of the user-created copy of the visual art object.

Following this stage, in some examples, user-created objects detected by the system in the acquired image are automatically analyzed and quantitatively ranked, e.g., according to one or more criteria, which may be pre-set, or which may be set adaptively. Object analysis may for example be based on machine learning models, rule-based image processing techniques, or a combination of the above.

Analysis may be based on a comparison of the image of the user-created target object and image data of a (desired) target reference version of the visual art object.

It is noted that any reference made herein with respect to the comparison of two sets of image data may pertain to the comparison of image data as a whole, and/or to the comparison of one or more selected features and/or selected image regions (e.g., region-of-interest of a scene or scenery) and/or (e.g., one or more object) characteristics including, for example, e.g. shading gradient, accuracy of tones, shape angle); and/or on some other metric (e.g. scored level of similarity to a specific artist's style), or any combination of the above.

In some embodiments, the system may be configured to suggest (e.g., with the assistance of a generative artificial intelligence engine), based on a digital representation of a user-created visual art object, continuations, completions, changes, corrections to the user-created visual art object and/or the like.

In some embodiments, the system may be configured to synthesize (e.g., with the assistance of a generative artificial intelligence engine) at least one source and at least one target reference for user tutoring, in addition to pre-existing library content.

In some embodiments, the system may include a library of digital representations of artwork and/or courses and/or SSL instructions and/or feedback, which may be sourced from other users and/or other third-party sources.

In some embodiments, the system may prompt the user to employ different utensils or tools and/or combine different utensils or tools for preparing a user-created artwork version. Such tools may pertain to pencil drawing, charcoal drawing, oil painting, lithography in drawing, different materials for 3-dimensional shaping (e.g., wood, copper, gold, silver, plaster, clay), and provide corresponding feedback. For example, the system may not provide feedback on coloring if the user indicates and/or the system detects use of charcoal instead of oil-based paint.

In some embodiments, the system may be configured to select and/or prioritize lessons and SSLs according to the media used by the user (e.g., emphasize line work when using charcoal, emphasize coloring and brushwork when using oil paintings).

In some embodiments, the system may be configured to provide "live feedback", or "on-the-fly" feedback. For example, analysis and feedback may occur continuously while the user is creating the art object. On-the-fly feedback may for example include any feedback as described herein and further include, for example, feedback on form, planning, composition, posture, handling of material and media, live recommendations, prompts, alerts, and/or the like.

In some embodiments, the system may be configured to allow multiple users to work together on the creation of a visual art object, e.g., using multiple instances of the app. The users may use the same reference source for collaboratively creating a multiple-user created artwork object.

In some embodiments, the system may be configured to associate different artwork portions for creation by corresponding users. A second target reference version that is associated with a second user may be displayed to a first user generating a user-created version relating to a first target reference version. For example, two or more users may each draw on a separate canvas or any other non-electronic or electronic (digital or analog) support medium, a different portion of an artwork, and the devices employed by each user may capture images of the separately drawn artwork objects to create respective digital representations which may then be combined and displayed to each user as a combined artwork on each device. For instance, a first user may draw the nose of a person's portrait, and a second user may draw the mouth of the person's portrait. A first client device employed by the first user may capture an image of the nose drawn by the first user, and a second client device employed by the second user may capture an image of the mouth drawn by the second user. The first and second client device may each display to the first and the second user both the nose and the mouth of the portrait. The first display device may thus display the nose drawn by the first user as well as the mouth drawn by the second user, and the second display device may display the mouth drawn by the second user as well as the nose drawn by the first user,

The nose and the mouth may be displayed in corresponding relations to each other, as drawn by the respective users, with respect to a reference frame. In some examples, creation of the corresponding objects may be continuously displayed to the respective users, e.g., in real-time with respect to the user-created version.

The user may create (e.g., draw) a finalized visual arts object through the completion of a plurality of intermediate artwork creation stages. Merely to simply the discussion that follows, the description may refer to creating drawings artwork. However, this should by no means be construed in a limiting manner. Accordingly, the same underlying principles described herein with respect to drawing may be applied, for example, in sculpturing. It is noted that the term "intermediate stage" may also encompass an initial stage and/or a final stage.

The creation of one or more assistive features may aid the user in successfully completing an intermediate stage. An assistive feature drawn or to be drawn by the user in relation to an artwork may be characterized by various attributes including, for example, one or more auxiliary geometric objects such as, for example, a circle, a line, a curve, and/or the like, and/or to characteristics of the one or more geometric objects including, for example, a curvature, a length, a thickness, relative size and/or position and/or orientation between two or more objects (a distance between two points, an angle between two lines);shading-related characteristics such as, for example, shading gradient, absolute shading intensity, relative shading intensity between two areas; shading color tone, shading direction, discrepancies between shading areas, inconsistent shadings in a same object, e.g., with respect to lighting conditions; contour shapes (e.g., facial cheek lines); expressions (e.g., joy, anger, happiness, sadness); and/or the like.

It is noted that, where applicable, the term user-created or user-generated artwork may encompass a user-created assistive feature, a user-created intermediate artwork creation, user-created final artwork (creation) (also: "end result") and/or any user-created feature of an artwork.

In some examples, the system may teach the user how to draw an assistive feature, and provide the user with feedback (including, e.g., instructions) in relation to user-created assistive features, for example, for at least one or all user-created assistive features, and/or the related intermediate stages. For example, based on analysis of data descriptive of user-drawn shading features, the system may present the user with shading-related feedback such as "your dark tone is not dark enough, try to incorporate more pencil pressure". In a further example, the system may analyze user drawn objects and provide the user with feedback pertaining to, for example, the relative proportions between two objects such as: "Your inner circle is too small relative to your outer circle". In a yet further example, the system may be configured to analyze user-drawn facial features for determining a current or inferred expression, and provide corresponding feedback such as, for example: "The mouth, eyes and cheek lines result in a sad expression. Are you sure that this is your intention?". In a further example, the system may be configured to detect discrepancies or inconsistencies with respect to (current or inferred) facial expressions, and present the user with corresponding feedback such as, for example: "The mouth is drawn as smiling, whereas the eyes and/or cheeks are drawn to express sadness."

The feedback may be indicative of a level of correspondence between an intermediate reference target image and a user-created intermediate target image. It is noted that in some examples, the term "intermediate" may also include the meaning of the term "initial" and/or "final". For instance, a final artwork creation may be an intermediate stage of another final artwork creation.

The system may prompt the user to draw the assistive feature aiding the user in completing an intermediate artwork creation stage. In some embodiments, the system may be configured to provide, based on an acquired image of the at least one current assistive feature, feedback to the user. It is noted that expressions pertaining to "an acquired image" or similar used in the description, may also encompass video information of artwork creation processes executed by the user.

The system may provide feedback in relation to an assistive feature and/or intermediate artwork creation stage in various ways, e.g., as described herein. For example, the system may be configured to infer or predict, based on at least one acquired image of the at least one current assistive feature, prospective intermediate and/or prospective final artwork creations, which may herein be collectively referred to as "inferred artwork", should the user decide to follow through with using the current assistive feature. An inferred or predicted prospective artwork is presented by the system to the user for their evaluation and/or commenting. The system may prompt the user to provide feedback on inferred prospective artwork and/or on an image of a user-created target version of an artwork creation. The system may analyze user-provided feedback and present the user with system-generated feedback (e.g., comments) on the user-provided feedback. The inferred artwork may be of a future or forthcoming intermediate stage, and/or of a final prospective inferred artwork creation.

Hence, the system feedback may be provided to the user in the form of an expected or inferred intermediate and/or final outcome of an artwork creation (also: "end result"), and/or in association with a skill level indication. Based on the inferred artwork presented to the user, the user may decide to continue, alter or redo the assistive feature. In case the user adapts or redoes the assistive feature, the system may display the user with a correspondingly adapted inferred artwork. A previous inferred artwork and a current adapted inferred artwork may both be presented to the user for allowing visual comparison.

In some examples, the system may analyze artwork information, and overlay assistive features over an image of the artwork and/or otherwise present the user with corrective output feedback. In some examples, the system may suggest corrective steps for revising or improving the analyzed artwork.

In some examples, the system may provide feedback "stage-by-stage". In some examples, the system feedback may be entirely or largely independent of a selected desired target reference version (also: final artwork creation). In some examples, the system feedback may largely depend on the completion of a selected desired target reference version (also: final artwork creation) but also take into consideration, at least partly, the user's performance with respect to the intermediate stages. For example, the system may instruct the user to submit an intermediate version of the artwork, and the system may provide feedback for each or for a selection of intermediate stages completed by the user. In a further example, feedback may be given continuously during the artwork creation or production process, e.g., whenever the system recognizes that an attempt to complete a certain task has been completed by the user. A task can relate to a part of an intermediate stage, to a single intermediate stage, and/or to a sequence of intermediate stages. In some examples, the system may adaptively determine when and/or how to provide feedback to the user, e.g., based on the user's progress made, skill level, based on user-requests or prompts provided to the system to present the user with feedback, and/or based on third-party input provided to the system.

In some embodiments, the system may be configured to share user-created artwork to other users, and receive feedback from the other users about the user-created artwork. In some examples, the system may automatically process feedback provided by other users, e.g., summarize multiple third-party feedback into a single feedback.

In some examples, feedback provided by the system may include instructions to correct and/or repeat certain steps, and/or instructions how to correct and/or repeat certain steps, e.g., to produce an improved intermediate artwork stage, and/or to arrive at an improved inferred prospective end result.

Feedback generated and presented by the system to the user may in some embodiments include motivational information, presenting to the user progress made over a certain period of time, e.g., in improving or mastering a certain skill. For example, the feedback may include presenting the user a plurality of images relating to a certain skill (e.g., in a temporal sequence) showing progress made by the user in mastering a skill. The images may be annotated with various (e.g., Al-generated) comments, mentioning the aspects at which the user improved their skill, and/or also mentioning setbacks, and/or commenting on how and when the user managed to overcome the setbacks.

As the user may choose to alter or to not alter an assistive feature for the completion of an intermediate stage, and/or as the user may choose to alter or to not alter the artwork of an intermediate stage, the system feedback may be (solely) based on the various intermediate stages (and/or related assistive features) created by the user. Accordingly, the system may in some examples be agnostic or invariant to a desired reference target image. In some examples, the system may only take into consideration features of intermediate reference target images, which may be images of at least one assistive feature, and/or images of intermediate artworks created by the user based on the at least one assistive feature. The system may present (also: display, and/or otherwise output) the user inferred prospective artwork with or without corrective feedback. In some examples, the system may present the inferred prospective artwork in response to a user request/prompt. In some examples, the system may present the inferred prospective artwork in cases where the inferred prospective artwork exceeds a certain high skill level, and/or drops below a certain low skill level. In some examples, at some or each intermediate stage, the system may ask a user whether they wish that the system infers and presents prospective artwork.

In some embodiments, as the user may choose to alter or to not alter an assistive feature for the completion of an intermediate stage, and/or as the user may choose to alter or to not alter an intermediate artwork creation, a user's creative drawing process can result in infinite number of adaptations or permutations of a reference target image. For example, a drawing session directed to drawing a face by guiding the user in through various intermediate stages may result in many end results, e.g., depending on the decisions taken by the user. Therefore, the system may provide the user with feedback relating to the intrinsic qualities of a user-created artwork end version, rather than providing feedback based on a comparison between the user-created artwork end version and a reference target image.

In some examples, drawing a plurality of assistive features may be required for completing an intermediate stage. Accordingly, a set of assistive features may be associated with the completion of a respective intermediate artwork creation stage.

In some embodiments, the system feedback may additionally consider features of the desired target reference version.

In some embodiments, the system may display to the user the prospective intermediate and/or prospective final artwork creation, for evaluation by the user, optionally, along with system-generated feedback. The feedback may provide explanations on how the selection of an assistive feature may impact the creation of prospective (intermediate) artwork.

System feedback may also suggest adaptions to the current assistive feature and demonstrate to the user why and/or how each one of these adaptions may impact the creation forthcoming corresponding alternative intermediate artwork creations.

Prospective artworks and their associated assistive features may be stored in the system for retrieval and comparison by the user against each other. Images of user-generated (intermediate) artwork creations may be stored in the system along with the associated assistive features for retrieval and comparison by the user against each other.

In some examples, the system may present the user the progress made in the skill-level for creating an artwork, and demonstrate how improvement of the skill-level in creating assistive features impacted the artwork creation over time.

In some embodiments, after completion of an intermediate stage, it may be required to erase a previously created assistive feature to prevent from the assistive feature to interfere with the appearance of the final artwork creation. The system may provide feedback about the level of removal of assistive features. For example, the system may provide feedback indicating insufficient removal of an assistive feature and/or indicate to the user that with respect to a certain intermediate stage an unrelated assistive feature is inadvertently perceivable. Accordingly, the absence of a feature may be positively accounted for in feedback provided to the user. In some examples, feedback may be provided to the user based on the user's decision made to agree to arrive at an inferred artwork presented by the system to the user. For example, an inferred (also: expected estimated) artwork outcome may contain one or more imperfections and/or mistakes, for example, with respect to various features such as proportions, shadings and/or perspectives. User-agreement to the inferred artwork containing an imperfection may provide an indication that the user fails to detect the imperfection. On the other hand, if the user decides to redo an assistive feature and/or an intermediate stage for that matter, the system may infer that the user was able to detect an imperfection and be scored (or otherwise rewarded) accordingly.

In some embodiments, the system may provide feedback about an inferred artwork, an assistive feature, and/or an intermediate artwork creation. For example, feedback may be provided by the system to the user by inferring an end result and comparing the inferred end result against a reference image and/or against permutations of the reference image.

In some examples, feedback may include overlaying an image of an inferred artwork, an assistive feature, and/or an intermediate artwork creation with corrective guides (e.g., geometrical feature, guides relating to emergent features such as shading & perspective) for comparison purposes. Since assistive features may not be visible (e.g., drawn) in the desired target reference image, feedback may be independent or at least partly independent of the user-created end-version of the artwork. Furthermore, the feedback may be independent or partly independent of a possible adaptations or permutations of the target reference image. Rather, feedback may be given based on attributes of the user-drawn assistive feature, for example, with respect to reference attributes of a reference assistive feature of the respective intermediate stage, and/or with respect to the intermediate artwork creation. In some examples, a reference attribute may pertain to abstracted geometrical features, for example, as stored in association with a reference assistive feature image.

In some examples, the system may prompt the user to decide on agreeing or not agreeing to proceed in accordance with an inferred artwork. Based on a decision made by the user and corresponding input provided to the system, the system may provide feedback about the selection made, e.g., in the form overlaying corrective guides, if applicable, and/or about any proportionality and/disproportionality and/or other features in the inferred artwork.

In some embodiments, the system may be configured to provide feedback on one or more intermediate drawing stages separately. In some embodiments, the system may be configured to (e.g., collectively) analyze a plurality of intermediate drawing stages and provide feedback on the (e.g., collectively) analyzed plurality of intermediate stages. Collective feedback may take into consideration the collective contribution of the plurality of intermediate stages and the final artwork for determining a user's skill level, e.g., independent of a reference artwork information (e.g., target reference version) that may or may not be stored in system **1000.**

In some examples, feedback may be provided based on a trained machine learning model.

In some examples, the user may prompt the system to provide feedback about user-created artwork, independent of and/or in association with a present drawing lesson. For example, the user may request/prompt that the system provides feedback about a certain user-created artwork feature, such as, "how are my shadings in this drawing?", e.g., for a produced result during a lesson about another feature (e.g., perspective) and/or the same feature (e.g., shading). The system may process the user-provided input using an NLP program, and provide the user with feedback about the respective feature (e.g., shading).

In some examples, the system may create, based on images of assistive features and/or intermediate artwork stages, a personalized drawing teaching lesson. For example, the system may process acquired images of user-created drawings and determine which skill may require further practice. For example, the system may determine that "shading" may require further practice, compared to drawing "in perspective", and accordingly create a personalized lesson with an emphasize on "shading" lessons. In some examples, the system may determine that the user has successfully reached a certain skill level, and recommend proceeding with a lesson of a comparatively more difficult skill level.

In some embodiments, the system may be configured to generate and/or present personalized artwork creation lessons, based on a user's request/prompt that is input to the system. The request/prompt may be provided, for example, in the form of images, in the form textual and/or speech input. For example, the user may upload an image of an object, along with textual and/or speech such as, for example: "I just took this picture of this horse, teach me to draw it", "teach me how to draw a horse".

In some embodiments, the user-provided prompt may be adapted by the system, for example, with respect to a skill level associated with the user; to a certain degree of difficulty; and/or with respect to one or more features or attributes of the image taught to be drawn by the user and/or lesson to be taught to the user including, for example, level of detail, image fidelity/style, level of abstraction and/or the like.

In some embodiments, user prompts may pertain to level of detail, image fidelity/style, level of abstraction and/or the like. An example prompt may be: "Here's an image of a horse; teach me how to draw a simplified sketch of the image, in a comic style.".

The system may process the prompt and present the user, based on the prompt, with an example target reference image, e.g., for approval by the user. The example target reference image may be Al-generated by the system. The system may further present the user with instructions on how to draw and/or paint the (approved) target reference image. The instructions may be custom-generated (e.g., personalized for the user) by the system, and/or selected from a database of instructions for presentation to the user.

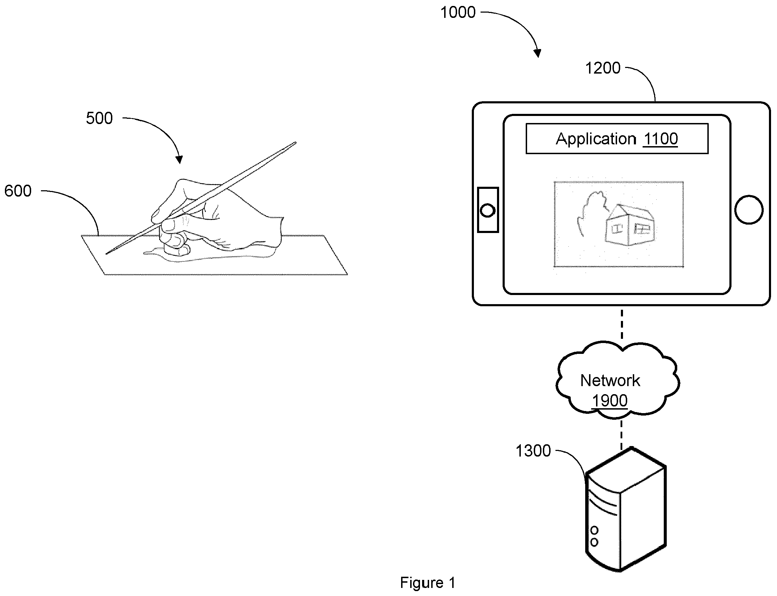

Reference is now made to **Figure 1****.** A system **1000** may be configured to execute an application **1100.** A user **500** who wishes to receive a visual arts teaching lesson, may activate application **1100** of system **1000.** Application **1100** may be installed on or executed by device **1200.** Device **1200** may be, for example, a tablet computer, smart phone, a mobile phone, a desktop computer, a laptop computer, a smartwatch device, and/or the like. User **500** may select a course designed for learning and/or improving a skill associated with the execution of creating an object of the visual arts. User **500** may then be provided with one or more courses designed for tutoring or teaching one or more SSLs and/or associated visual art tutoring lessons.

User **500** may create an artwork object, for example, a drawing on a sheet of paper **600,** a painting on canvas, a sculpture, and/or the like, herein also referred to as "user-created visual arts object". In some embodiments, the user-created visual arts object may be a user-created copy version of a source reference visual arts object (or simply "source visual arts object") displayed to the user. In some examples, system **1000** may instruct user **500** to create a user-created copy version (or simply "copy version") of a source reference visual arts object that is a duplicate of a source reference visual arts object displayed to the user. In some other examples, system **1000** may instruct user **500** to create a user-created copy version of a source reference visual arts object that is different from the source reference visual arts object displayed to the user in one or more aspects. For example, system **1000** may present the user with a reference visual art object having characteristics relating to a first scenario (e.g., first perspective, first lighting conditions), and request or prompt that the user produces a copy version of the same source reference visual art object, but under a second scenario that is different from the first scenario (e.g., under a second perspective, under second lighting conditions). The system **1000** may present the user with the conditions of the second scenario under which the copy version of the source visual art object shall be created. For example, system **1000** may display a first light source position along with the source reference visual art object. System **1000** may further display a second light source position but without the source reference visual art object, and prompt user **500** to generate a copy version of the source reference visual art object under the second lighting condition. Upon completion of the generation of the copy version, user **500** may acquire, using application **1100,** an image of the copy version for comparison by application **1100**/server **1300** with a desired reference target version under second lighting conditions of the source reference visual art object.

In some embodiments, application **1100** may be a client application, communicating with a corresponding server application running on a server **1300.**

In some embodiments, device **1200** may be in wired or wireless communication with server **1300,** through a network **1900,** such as the Internet, intranet, LAN, WAN, 5G, or the like. In some examples, the system includes multiple devices communicating with each other over network **1900,** e.g., to allow collaborative working on the same artwork and/or different artworks and/or to provide collaborative tutoring.

In some embodiments, parts of the functionalities of the application may be performed, respectively, by a client application, a server application, or a combination thereof.

When user **500** has completed the creation of at least a part of a user-created visual arts object (the user created copy version), user **500** may be presented with the analysis results, comprising for example drawing errors, feedback concerning progress made, feedback concerning progress and/or errors made relative to peers, performance accuracy, performance scores, general comments, visual arts theme type and/or level change recommendations, and/or the like.

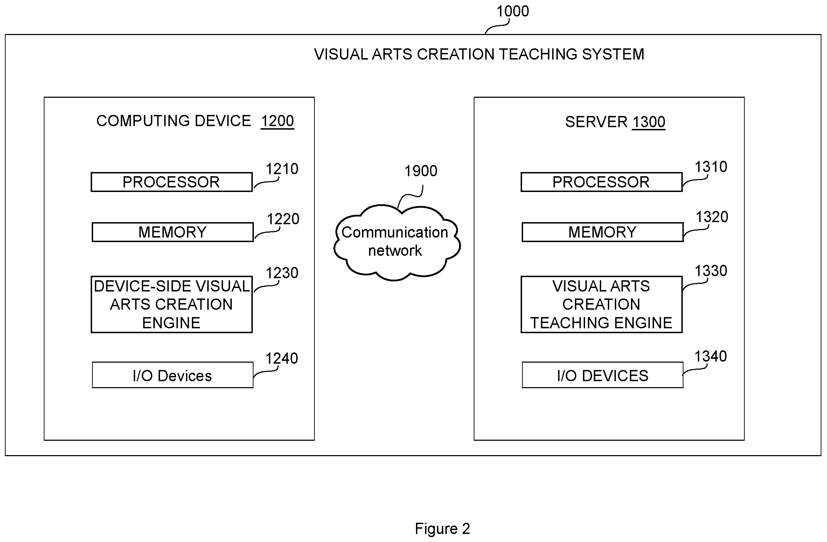

Additional reference is made to **Figure 2****.** Computing device **1200** may comprise one or more processors **1210** and one or more memories **1220.** Any of processors **1210** may be a Central Processing Unit (CPU), a microprocessor, an electronic circuit, an Integrated Circuit (IC) or the like. Processors **1210** may be utilized to perform computations required by system **1000** and/or any of its subcomponents.

System **1000** may further comprise one or more Input/Output devices **1240** and, optionally, Input/Output ports, which may be connected with the one or more the Input/Output devices **1240.**

Similarly, server **1300** may include a processor **1310,** and a memory **1320.** Execution of computer-executable instructions stored in memory **1320** by processor **1310** may result in a server-side device-side visual arts creation (teaching) engine **1330.** Server **1300** may further include input/output devices **1340.**

The term "processor", as used herein, may additionally or alternatively refer to a controller. Processor **1210** and/or processor **1310** may be implemented by various types of processor devices and/or processor architectures including, for example, embedded processors, communication processors, graphics processing unit (GPU)-accelerated computing, soft-core processors and/or general-purpose processors.

Memory **1220** may comprise data and algorithm code which, when executed by processor **1210,** results in a device-side visual arts creation engine **1230,** e.g., as outlined herein.

Memory **1320** may comprise data and algorithm code which, when executed by processor **1310,** results in a server-side visual arts creation teaching engine **1330,** e.g., as outlined herein.

Memory **1220** and/or memory **1320** may be implemented by various types of memories, including transactional memory and/or long-term storage memory facilities and may function as file storage, document storage, program storage, or as a working memory. The latter may for example be in the form of a static random access memory (SRAM), dynamic random access memory (DRAM), read-only memory (ROM), cache and/or flash memory. As working memory, Memory **1220** and/or memory **1320** may, for example, include, e.g., temporally-based and/or non-temporally based instructions. As long-term memory, Memory **1220** and/or memory **1320** may for example include a volatile or non-volatile computer storage medium, a hard disk drive, a solid-state drive, a magnetic storage medium, a flash memory and/or other storage facility. A hardware memory facility may for example store a fixed information set (e.g., software code) including, but not limited to, a file, program, application, source code, object code, data, and/or the like.

Input devices of I/O devices **1240** and/or **1340** may for example include inertial and/or non-inertial sensors such as cameras, microphones, linear acceleration sensors, angular acceleration sensors, gyroscopes, satellite-based navigation systems (e.g., the US-based Global Positioning System), microphones, direction and selection control devices (e.g., joystick, a trackball, a mouse), gravitational sensors, and/or a touch sensitive screen.

Output devices of I/O devices **1240** and/or **1340** may include a display, a touch-sensitive display, a speaker, a tactile output device, a haptic output device. In some examples, the input device and the output device may be the same device, e.g., in the case of a touchscreen. The display may be a head-mountable display (HMD). In some examples, feedback may be provided in a virtual-reality, augmented-reality, or mixed-reality feedback modality.

An input device may acquire an image of a user-created object of visual art, and provide the user with feedback about the user-created object of visual art via an output device.

Feedback that may be provided may include qualitative, quantitative feedback, and/or corrective feedback. For example, based on sensed physiological parameter values (e.g., blood pressure, pulse, sweat rate, body temperature, user motion, user movement, user posture), the system may be configured to determine a level of stress of a user while creating the visual arts object, and provide the user with corresponding feedback. In some embodiments, the system may automatically update a skill level exercise based on the user-generated visual arts object.

The components detailed below may be implemented as one or more sets of interrelated computer instructions, executed for example by any of processors **1210** and/or processors **1310.** In some embodiments, some of the components may be executed by one computing device while others may be executed by another computing platform such as server **1300.** The components may be arranged as one or more executable files, dynamic libraries, static libraries, methods, functions, services, or the like, programmed in any programming language and under any computing environment.

A communication module of I/O devices **1240** and/or **1340** may be configured to enable wired and/or wireless communication between the various components and/or modules of the system and which may communicate with each other over one or more communication buses (not shown), signal lines (not shown) and/or network **1900.**

Network **1900** may be configured for using one or more communication formats, protocols and/or technologies such as, for example, to internet communication, optical or RF communication, telephony-based communication technologies and/or the like. In some examples, the communication module may include I/O device drivers (not shown) and network interface drivers (not shown) for enabling the transmission and/or reception of data over network **1900.** A device driver may for example, interface with a keypad or to a USB port. A network interface driver may for example execute protocols for the Internet, or an Intranet, Wide Area Network (WAN), Local Area Network (LAN) employing, e.g., Wireless Local Area Network (WLAN)), Metropolitan Area Network (MAN), Personal Area Network (PAN), extranet, 2G, 3G, 3.5G, 4G, 5G, 6G mobile networks, 3GPP, LTE, LTE advanced, Bluetooth^{®} (e.g., Bluetooth smart), ZigBee^{™}, near-field communication (NFC) and/or any other current or future communication network, standard, and/or system.

The teaching engine (implemented, for example, by device-side teaching engine **1230** (or visual arts creation engine) and/or server-side arts creation (teaching) engine **1330)** may be configured to implement steps, processes, and/or methods as described herein.

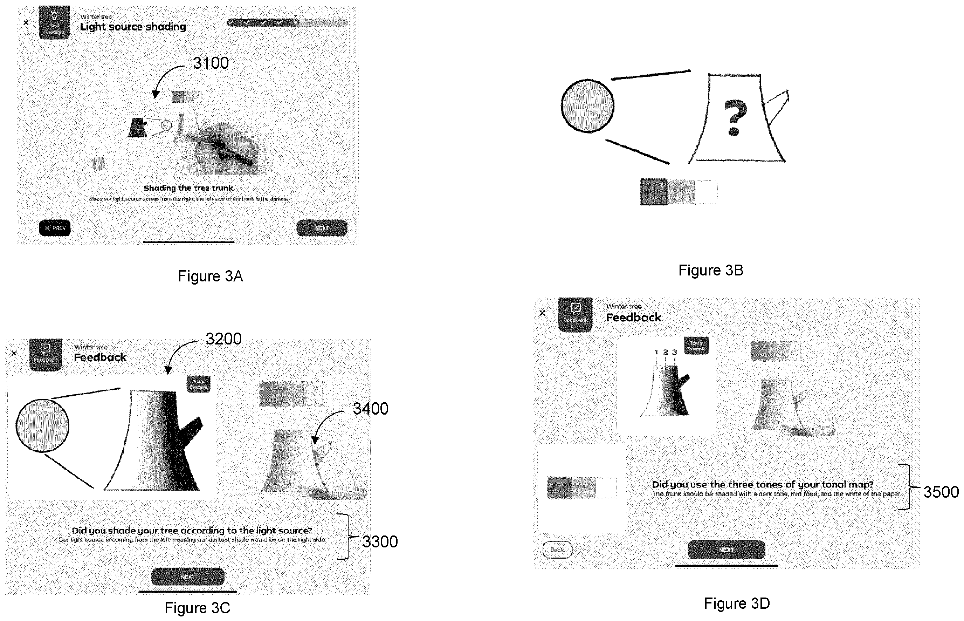

Reference is now made to **Figures 3A-3D.Figure 3A** shows a possible screenshot of a "shading" SSL provided for example within the frame work of a "how to do shading" course, where the user is instructed how to correctly shade a tree trunk **3100** that is lit from the right, with respect to a reference frame. In the present example, the shaded tree trunk **3100** lit from the right may also be referred to as the source reference visual art object **3100.**

**Figure 3B** shows a second screenshot of the "shading" SSL, where the user is prompted to create a copy version **3400** that is different in at least one aspect from the source visual arts object **3100** (e.g., trunk that is lit from the left instead of from the right, with respect to the reference frame). Hence, the system-generated desired reference target version **3200** is different in at least one aspect (here: lighting conditions) compared to the source reference visual art object **3100.**

**Figure 3C** shows a third screenshot, providing feedback **3300** to a copy version **3400** of the source reference visual art object **3100** compared to the desired reference target version **3200,** following being prompted to provide a drawing (copy version **3400)** according to the instructions provided in **Figure 3B****.** In the example shown, shading of the user-created copy version **3400** was incorrect, and corresponding feedback including the reference target version **3200** is provided to the user (comments / feedback **3300** in **Figures 3C** and 3500 in **Figure 3D****).**

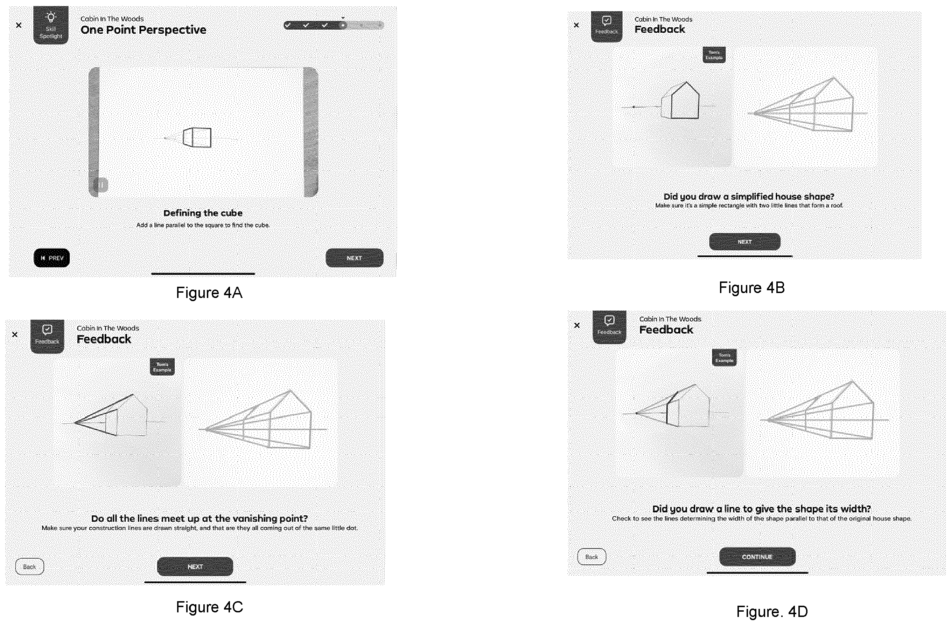

Reference is now made to Figures 4A-D. **Figure 4A** shows a possible screenshot of a "perspective drawing" SSL, where the user is instructed how to correctly create a perspective 2D-representation of a 3D object (e.g., cube, in this case the source reference visual art object) under a one-point perspective. The perspective drawing SSL may be provided within the framework of a "perspective drawing course".

**Figures 4B-4D** show screenshots with feedbacks about respective images of user-created copy versions of a visual art object (2D-drawing representation of a 3D object), based on their comparison with target reference versions of the visual art object.

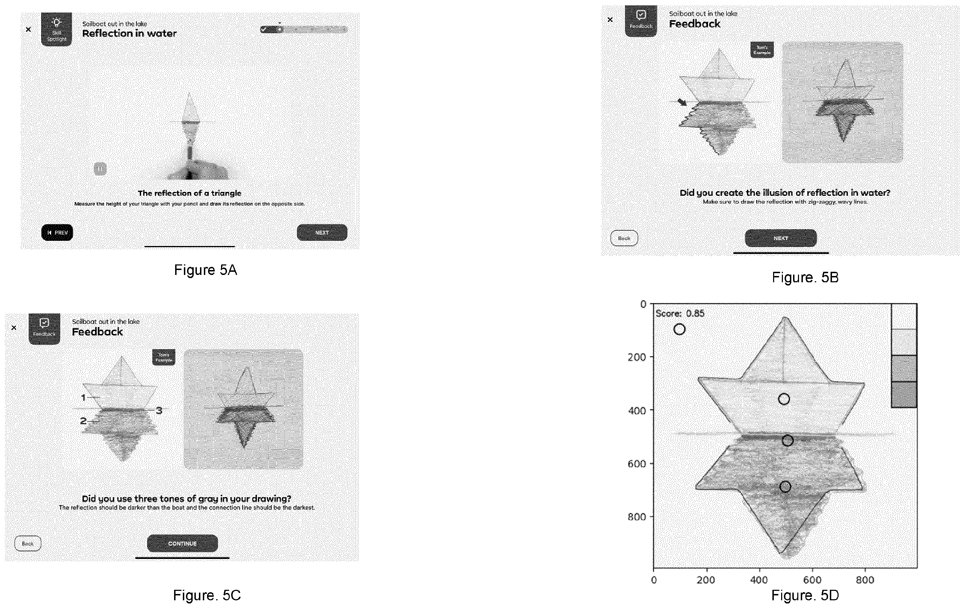

Reference is now made to **Figures 5A-5C. Figure 5A** shows a possible screenshot of a "symmetry drawing" SSL, where the user is instructed how to create a mirror-drawing of an object. The symmetry SSL may be provided for example within the framework of a "symmetry drawing course".

**Figures 5B-5D** show screenshots with feedbacks about respective images of user-created copy versions of a source visual art object (mirror objects), based on their comparison with a desired reference target version of the visual art object.

As schematically shown in **Figure 5D****,** the system may in some embodiments be configured to automatically detect and characterize features of user-created versions of visual artwork. Such features may include, for example, recognition of the shape of the user-created object, recognition of a symmetry axis, the squiggly or undulating lines in the reflection portion of a drawing, the border between a source object and the mirrored version or reflected version of the source object, and/or regions of expected shading in a scene (e.g., shadow cast by an object in a scene, and/or shaded regions of an object). Feature characterization may include a score.

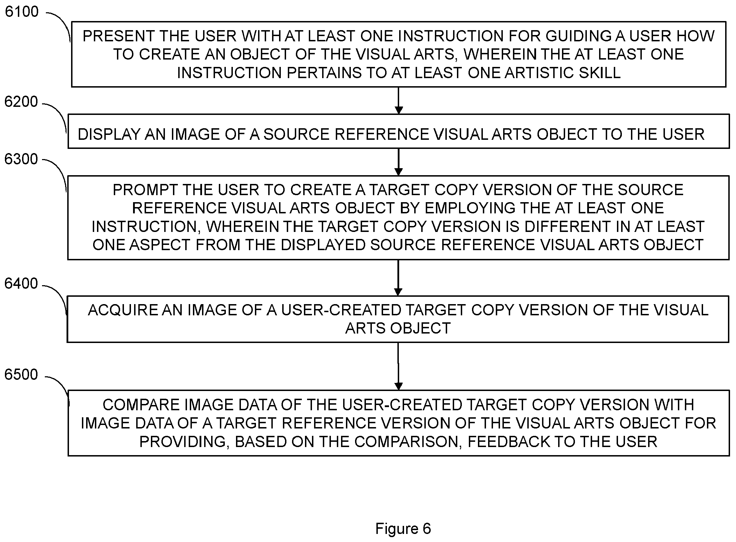

Reference is now made to **Figure 6****.** In some embodiments, a method for teaching the creation an object of the visual arts may include, for example, for example, presenting the user with at least one instruction for guiding a user how to create an object of the visual arts, wherein the at least one instruction pertains to at least one artistic skill (block **6100).**

In some embodiments, the method may optionally further include displaying an image of a source reference visual arts object to the user (block **6200).**

In some embodiments, the method may include prompting the user to create a user-created copy version (e.g., of the source reference visual arts object), by employing the at least one instruction. In some examples, the user may be prompted to create a copy version that may be different in at least one aspect (also: feature) from the source reference visual arts object (block **6300).**

In some embodiments, the method may further include acquiring an image of a user-created copy version of the visual arts object (block **6400).**

Optionally, image acquisition may include, accompanied with and/or followed by image pre-processing such as, for example, cleaning image background noise, image foreground noise (e.g., from the adjusting light levels, cleaning noisy data from the imaged sheet of paper onto which the user created the user-created copy version of the source reference visual arts object; reducing unintended shadows or shading gradients (due to occlusion from the device or hands, uneven lighting etc.); removing or reducing geometric distortions due to camera angle; detection of distinct objects, their sizes, edges etc. in the image; detection and subsequent correction of blurring, distortion and/or low resolution of drawing within the image; and/or detection and removal of image artifacts.

In some embodiments, the method may include comparing image data of the user-created copy version with image data of a reference target version of the source visual arts object for providing, based on the comparison, feedback to the user (block **6500).**

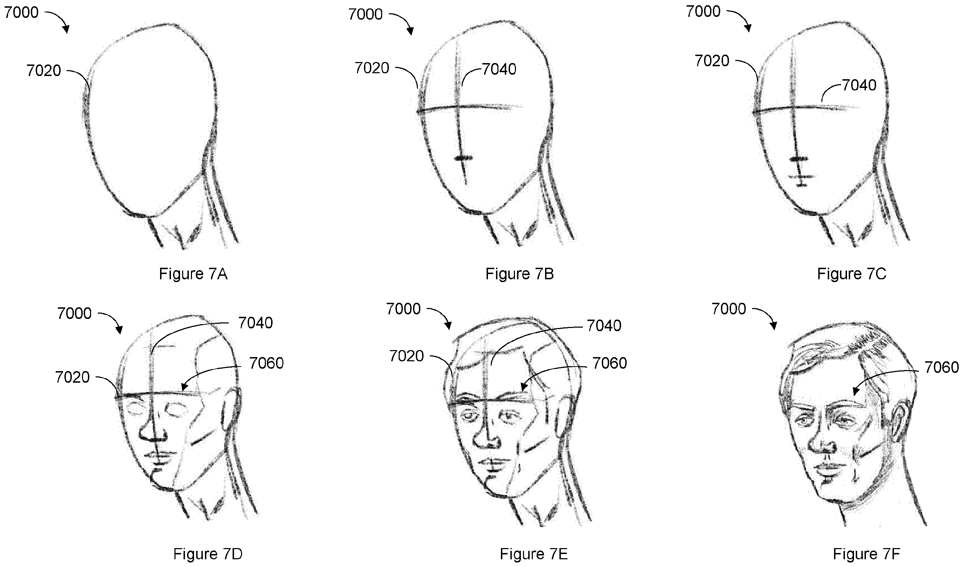

Further reference is made to **Figures 7A-7F****.** In some embodiments, system **1000** may be configured to provide feedback on one or more intermediate drawing stages separately. In some embodiments, system **1000** may be configured to (e.g., collectively) analyze a plurality of intermediate drawing stages and provide feedback on the (e.g., collectively) analyzed plurality of intermediate stages. Collective feedback takes into consideration the collective contribution of the plurality of intermediate stages for determining a user's skill level.

As mentioned herein above, an intermediate stage may pertain to at least one assistive feature created by the user, and/or to an intermediate artwork creation of an intermediate stage. An intermediate artwork creation, which may be drawn by the user based on one or more assistive features, may contain one or more elements of a complete or final artwork creation (also: end result).

As exemplified with respect to **Figures 7A-7F****,** the task of drawing a human face **7000 (****Figure 7F****)** may be accomplished through the completion of five intermediate stages **(****Figures 7A-7E****).**

For example, to draw a human face **7000,** system **1000** may provide user with instructions about how to draw an assistive feature, and provide feedback to the user about the user-drawn assistive feature. For example, in first stage **(****Figure 7A****),** system **1000** may instruct the user how to draw a correctly proportioned oval **7020** relating to a face contour. In a second stage **(****Figure 7B****)** subsequent to the first stage, system **1000** may instruct the user how to draw cross-guidelines **7040** having correct angle of crossing relative to each other as well as correct position and orientation relative to oval **7020.** In additional subsequent stages (Figures **7C-7F****),** and how to draw, based on the cross-guidelines, facial features **7060** (e.g., mouth, nose, eyes, hair, cheeks) and how to apply shadings **(****Figure 7E****).**

System **1000** may provide feedback on a user-generated artwork and/or assistive features created in an intermediate stage. For example, system **1000** may provide feedback on the degree of proportionality of a user-drawn oval guideline, and/or on attributes of an angle between two or more cross-guidelines and/or their position and/or orientation relative to an oval, and/or the like.

For example, a system prompts the user to draw a face looking to the side at an angle of 45 degrees. Instead of being positioned about 90 degrees to each other and/or aligned with the oval, the user draws cross-guideline which are slightly tilted in clockwise direction. As a result thereof, system **1000** may provide feedback containing the following information: The angle between the lines is not as expected (*"Technique feedback"*) and/or the system infers the prospective end result, which would be a face gazing to the side and upwards, which is not the desired result (*"Inferred Result feedback"*)*.*

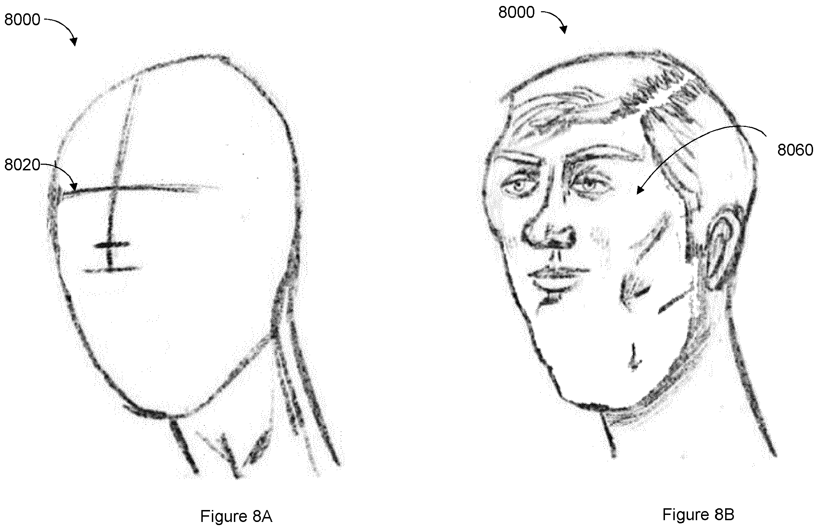

In some examples, the feedback may be in the form of presenting to the user an inferred prospective final artwork creation, generated based on an intermediate drawing, which can be an assistive feature and/or an intermediate artwork creation. In some examples, the inferred prospective artwork may be of a future intermediate stage and/or of a final inferred prospective artwork. An example of "wrongly drawn" assistive features is shown in **Figure 8A** (feature **8020).** **Figure 8B** illustrates a prospective artwork (face **8000)** that is inferred by system **1000** from the assistive features **8020,** along with the corresponding facial features **8060.**

In some examples, system **1000** may also include instructions when (at which stage) and/or how to erase assistive features such as, for example, cross-guidelines. For example, as shown in **Figure 7F****,** guidelines **7020** which are present in **Figure 7F****,** are erased. The system may provide feedback regarding the erasing of guidelines (e.g., indicate that guidelines are only partially erased). Erasing guidelines to a greater extent may be more positively evaluated by the system.

In another example, a user attempting to draw a cube in perspective may draw assistive features such as vanishing point(s) and grid lines for drawing a cube in perspective. System **1000** recognizes and processes the assistive features to infer or predict, based on the recognized processed features, a prospective cube drawing. The user may then use this prospective cube drawing for evaluation, e.g., to continue or alter their drawing.

### Additional Examples:

Example **1** pertains to a method for providing a user with a lesson for creating an object of the visual arts, the method comprising:
presenting the user with at least one instruction for guiding a user how to create an object of the visual arts, wherein the at least one instruction pertains to at least one artistic skill;
displaying to the user visual arts creation instructions relating to a source reference visual arts object;
prompting the user to create a target copy version of the source reference visual arts object by employing the at least one instruction, wherein the target copy version can be different in at least one aspect from the displayed source reference visual arts object;
acquiring an image of a user-created target copy version of the visual arts object;
comparing image data of the user-created target copy version with image data of a target reference version of the visual arts object for providing, based on the comparison, feedback to the user.

Example **2** includes the subject matter of Example **1** and, optionally, wherein the target copy version is different in at least one aspect from the displayed source reference visual arts object.

Example **3** includes the subject matter of examples **1** and/or **2,** wherein, wherein the visual arts creation instructions include an image of the source reference visual arts object, to an artistic theme, an artistic style, or any combination of the aforesaid.

Example **4** includes the subject matter of any one or more of the examples **1** to **3** and, optionally, wherein the at least one different aspect pertains to one of the following:
lighting conditions; perspective; geometry; symmetry axis, and/or any combination of the above.

Example **5** includes the subject matter of any one or more the examples **1** to **4** and, optionally, generating, based on the image of the source reference version, the image data of the target reference version of the visual art object based on the interpolation of the image of the source reference visual arts to 3D objects, automatic coloring, and/or by changing other characteristics relating to the image data of the source reference version.

Example **6** includes the subject matter of any one or more of Examples **1** to **5** and, optionally, wherein the feedback is provided automatically.

Example **7** includes the subject matter of any one or more of the Examples **1** to **6** and, optionally, wherein comparing data descriptive of one or more user-created copy versions with data descriptive of the reference target version may include determining a level of correspondence estimate between image data of the one or more user-created copy versions and image data of the target reference version of the visual artwork.

Example **8** includes the subject matter of any one or more of the Examples **1** to **7** and, optionally, further comprising determining, based on the comparison, a skill level of the user with respect to the at least one artistic skill.

Example **9** includes the subject matter of any one or more of the Examples **1** to **8** and, optionally, further comprising adapting a level of difficulty of an exercise performed or to be performed by the user with respect to the at least one artistic skill.

Example **10** includes the subject matter of any one or more of the Examples **1** to **9** and, optionally, comprising, based on the comparing, adapting a skill level value that is associated with the user with respect to the execution of the at least one artistic skill.

Example **11** includes the subject matter of any one or more of the Examples **1** to **10** and, optionally, wherein the feedback includes providing symbols in overlay with an image of the user-created version, visual feedback, auditory feedback, VR-based feedback, AR-based feedback, MR-based feedback a numerical score, a qualitative feedback, a quantitative feedback, recommendations for correcting an artistic feature including with respect to improving features relating to lighting characteristics, shadowing characteristics, whether and/or how to retake an image of the user-created version; and/or any combination of the above.

Example **12** includes the subject matter of any one or more of the Examples **1** to **11** and, optionally, wherein the feedback relates to a level of correspondence with respect to an artistic theme and/or style.

Example **13** includes the subject matter of any one or more of the Examples **1** to **12** and, optionally, wherein the feedback includes pre-preprocessing instructions for improving the image of the user-created version to obtain an updated image of the user-created version of a visual artwork.

Example **14** pertains to a system for providing a visual arts teaching session to a user, the system comprising:
at least one processor; and
at least one memory configured to store data and software code portions executable by the at least one processor to allow the execution of the following:
presenting the user with at least one instruction for guiding a user how to create an object of the visual arts, wherein the at least one instruction pertains to at least one artistic skill;
displaying a first image of a reference visual arts object created or to be created or for creation by the user;
instructing the user to create a target copy version of the reference visual arts object, wherein the target copy version can be different in at least one aspect from the reference visual arts object;
acquiring image data descriptive of a user-created copy version of the visual arts object;
comparing data descriptive of the user-created copy version with data descriptive of the target-copy version to provide, based on the comparison, feedback to the user.

Example **15** includes the subject matter of Example **14** and, optionally, wherein the target copy version is different in at least one aspect from the displayed source reference visual arts object.

Example **16** includes the subject matter of Examples **14** and/or **15** and, optionally, wherein the visual arts creation instructions include an image of the source reference visual arts object, to an artistic theme, an artistic style, or any combination of the aforesaid.

Example **17** includes the subject matter of any one or more of the Examples **14** to **16** and, optionally wherein the at least one different aspect pertains to one of the following:
lighting conditions; perspective; geometry; symmetry axis, and/or any combination of the above.

Example **18** includes the subject matter of any one or more of the examples **14** to **17** and, optionally, comprising generating, based on the image of the source reference version, the image data of the target reference version of the visual art object based on the interpolation of the image of the source reference visual arts to 3D objects, automatic coloring, and/or by changing other characteristics relating to the image data of the source reference version.

Example **19** includes the subject matter of any one or more of the examples **14** to **18** and, optionally, wherein the feedback is provided automatically.

Example **20** includes the subject matter of any one or more of the examples **14** to **19** and, optionally, wherein comparing data descriptive of one or more user-created copy versions with data descriptive of the reference target version may include determining a level of correspondence estimate between image data of the one or more user-created copy versions and image data of the target reference version of the visual artwork.

Example **21** includes the subject matter of any one or more of the examples **14** to **20** and, optionally, further comprising determining, based on the comparison, a skill level of the user with respect to the at least one artistic skill.

Example **22** includes the subject matter of any one or more of the examples **14** to **21** and, optionally, further comprising adapting a level of difficulty of an exercise performed or to be performed by the user with respect to the at least one artistic skill.

Example **23** includes the subject matter of any one or more of the examples **14** to **22** and, optionally, comprising, based on the comparing, adapting a skill level value that is associated with the user with respect to the execution of the at least one artistic skill.

Example **24** includes the subject matter of any one or more of the examples **14** to **23** and, optionally, wherein the feedback includes providing symbols in overlay with an image of the user-created version, visual feedback, auditory feedback, VR-based feedback, AR-based feedback, MR-based feedback a numerical score, a qualitative feedback, a quantitative feedback, recommendations for correcting an artistic feature including with respect to improving features relating to lighting characteristics, shadowing characteristics, whether and/or how to retake an image of the user-created version; and/or any combination of the above.

Example **25** includes the subject matter of any one or more of the examples **14** to **24** and, optionally, wherein the feedback relates to a level of correspondence with respect to an artistic theme and/or style.

Example **26** includes the subject matter of any one or more of the examples **14** to **25** and, optionally, wherein the feedback includes pre-preprocessing instructions for improving the image of the user-created version to obtain an updated image of the user-created version of a visual artwork.

Example **27** pertains to a method for providing a user with a lesson for creating an object of the visual arts, the method comprising:
receiving an image of at least one user-created intermediate artwork and/or assistive feature relating to an artwork;
analyzing the image of the at least one intermediate artwork and/or assistive feature; and
providing feedback on the at least one intermediate artwork and/or assistive feature.

Example **28** includes the subject matter of example **27** and, optionally, wherein the providing of feedback includes:
inferring, based on the at least one intermediate artwork and/or assistive feature, a prospective artwork product; and
displaying and/or otherwise outputting to the user the inferred prospective artwork product

Example **29** includes the subject matter of example **27** and/or example **28** and, optionally, receiving an adapted intermediate artwork and/or assistive feature; and
providing, based on the adapted intermediate artwork and/or assistive feature, updated feedback to the user.

Example **30** includes the subject matter of any one or more of the examples **27** to **29** and, optionally, wherein the at least one intermediate artwork and/or assistive feature is produced in association with an intermediate stage of creating a final artwork.

Example **31** includes the subject matter of any one or more of the examples **27** to **30** and, optionally, wherein the feedback pertains to the extent the at least one assistive feature is no longer visible in the final artwork.

Example **32** includes the subject matter of any one or more of the examples **27** to **31** and, optionally, analyzing a plurality of intermediate stages for producing an artwork creation; and providing collective feedback on the plurality of intermediate stages.

Example **33** includes the subject-matter any one or more of the examples **27** to **32** and, optionally, wherein the feedback is provided independent of target reference artwork information.

Example **34** pertains to a system for providing a user with a lesson for creating an object of the visual arts, the system comprising:
at least one processor; and
at least one memory configured to store data and software code portions executable by the at least one processor to allow the execution of the following:
receiving an image of at least one user-created intermediate artwork and/or assistive feature relating to an artwork;
analyzing the image of the at least one intermediate artwork and/or assistive feature; and
providing feedback on the at least one intermediate artwork and/or assistive feature.

Example **35** includes the subject matter of example **34** and, optionally, wherein the providing of feedback includes:
inferring, based on the at least one intermediate artwork and/or assistive feature, a prospective artwork product; and
displaying the inferred prospective artwork product.

Example **36** includes the subject matter of examples **34** and/or example **35** and, optionally, wherein the system is further configured to execute the following steps:

Example **37** includes the subject matter of any one or more of the examples **34** to **36** and, optionally, receiving an adapted intermediate artwork and/or assistive feature; and providing, based on the adapted intermediate artwork and/or assistive feature, updated feedback to the user.

Example **38** includes the subject matter of any one or more of the examples **34** to **37** and, optionally, wherein the at least one intermediate artwork and/or assistive feature is produced in association with an intermediate stage of creating a final artwork.

Example **39** includes the subject matter of any one or more of the examples **34** to **38** and, optionally, wherein the feedback pertains to the extent the at least one assistive feature is no longer visible in the final artwork, and/or no longer visible in a intermediate artwork creation that is drawn following an intermediate artwork which was drawn with the assistance of the at least one assistive feature.

Example **40** includes the subject matter of Example **39** and, optionally, wherein lesser visibility of the at least one assistive feature is associated with greater, increased or improved user skill level.

Example **41** includes the subject matter of any one or more of the examples **34** to **40** and, optionally, comprising: analyzing a plurality of intermediate stages for producing an artwork creation; and
providing collective feedback on the plurality of intermediate stages.

Example **42** includes the subject matter of any one or more of the examples **34** to **41** and, optionally, wherein the feedback is provided independent of target reference artwork information.

It is noted that embodiments described herein, e.g., with respect to Examples 1 to 42, may be combined in any suitable way.

The various features and steps discussed above, as well as other known equivalents for each such feature or step, can be mixed and matched by one of ordinary skill in this art to perform methods in accordance with principles described herein. Although the disclosure has been provided in the context of certain embodiments and examples, it will be understood by those skilled in the art that the disclosure extends beyond the specifically described embodiments to other alternative embodiments and/or uses and obvious modifications and equivalents thereof. Accordingly, the disclosure is not intended to be limited by the specific disclosures of embodiments herein.

Any digital computer system, module and/or engine exemplified herein can be configured or otherwise programmed to implement a method disclosed herein, and to the extent that the system, module and/or engine is configured to implement such a method, it is within the scope and spirit of the disclosure. Once the system, module and/or engine are programmed to perform particular functions pursuant to computer readable and executable instructions from program software that implements a method disclosed herein, it in effect becomes a special purpose computer particular to embodiments of the method disclosed herein. The methods and/or processes disclosed herein may be implemented as a computer program product that may be tangibly embodied in an information carrier including, for example, in a non-transitory tangible computer-readable and/or non-transitory tangible machine-readable storage device. The computer program product may be directly loadable into an internal memory of a digital computer, comprising software code portions for performing the methods and/or processes as disclosed herein. The term "non-transitory" is used to exclude transitory, propagating signals, but to otherwise include any volatile or non-volatile computer memory technology suitable to the application.

Additionally, or alternatively, the methods and/or processes disclosed herein may be implemented as a computer program that may be intangibly embodied by a computer readable signal medium. A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a non-transitory computer or machine-readable storage device and that can communicate, propagate, or transport a program for use by or in connection with apparatuses, systems, platforms, methods, operations and/or processes discussed herein.

The terms "non-transitory computer-readable storage device" and "non-transitory machine-readable storage device" encompasses distribution media, intermediate storage media, execution memory of a computer, and any other medium or device capable of storing for later reading by a computer program implementing embodiments of a method disclosed herein. A computer program product can be deployed to be executed on one computer or on multiple computers at one site or distributed across multiple sites and interconnected by one or more communication networks.

These computer readable and executable instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable and executable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable and executable instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

In the discussion, unless otherwise stated, adjectives such as "substantially" and "about" that modify a condition or relationship characteristic of a feature or features of an embodiment of the invention, are to be understood to mean that the condition or characteristic is defined to within tolerances that are acceptable for operation of the embodiment for an application for which it is intended.

Unless otherwise specified, the terms 'about' and/or 'close' with respect to a magnitude or a numerical value may imply to be within an inclusive range of -10% to +10% of the respective magnitude or value.

It should be noted that where an embodiment refers to a condition of "above a threshold", this should not be construed as excluding an embodiment referring to a condition of "equal or above a threshold". Analogously, where an embodiment refers to a condition "below a threshold", this should not to be construed as excluding an embodiment referring to a condition "equal or below a threshold". It is clear that should a condition be interpreted as being fulfilled if the value of a given parameter is above a threshold, then the same condition is considered as not being fulfilled if the value of the given parameter is equal or below the given threshold. Conversely, should a condition be interpreted as being fulfilled if the value of a given parameter is equal or above a threshold, then the same condition is considered as not being fulfilled if the value of the given parameter is below (and only below) the given threshold.

It should be understood that where the claims or specification refer to "a" or "an" element and/or feature, such reference is not to be construed as there being only one of that element. Hence, reference to "an element" or "at least one element" for instance may also encompass "one or more elements".

As used herein the term "configuring" and/or "adapting" for an objective, or a variation thereof, implies using materials and/or components and/or data in a manner designed for and/or implemented and/or operable or operative to achieve the objective.

Unless otherwise stated or applicable, the use of the expression "and/or" between the last two members of a list of options for selection indicates that a selection of one or more of the listed options is appropriate and may be made, and may be used interchangeably with the expressions "at least one of the following", "any one of the following" or "one or more of the following", followed by a listing of the various options.

As used herein, the phrase "A,B,C, or any combination of the aforesaid" should be interpreted as meaning all of the following: (i) A or B or C or any combination of A, B, and C, (ii) at least one of A, B, and C; and (iii) A, and/or B and/or C. This concept is illustrated for three elements (i.e., A,B,C), but extends to fewer and greater numbers of elements (e.g., A, B, C, D, etc.).

It is noted that the terms "operable to" or "operative to" can encompass the meaning of the term "adapted or configured to". In other words, a machine "operable to" or "operative to" perform a task can in some embodiments, embrace a mere capability (e.g., "adapted") to perform the function and, in some other embodiments, a machine that is actually made (e.g., "configured") to perform the function.

The term "threshold" used herein may pertain to static thresholds, dynamic thresholds or adaptive thresholds. Static thresholds are predetermined thresholds that remain constant. Dynamic thresholds are forcefully changed, for example, at a certain time of day, or a certain day of the year. Adaptive thresholds are changed in response to changes in characteristics of, for example, captured sounds and/or audio signals and/or MIDI signals, physiological characteristics of a user, environmental characteristics, and/or in the network, and may vary depending on a variety of parameters.

It is noted that the expressions "concurrently" and "in real-time" as used herein may also encompass the meaning of the expression "substantially concurrently" and "substantially in real-time".

"Real-time" as used herein generally refers to the updating of information at essentially the same rate as the data is received. More specifically, in the context of the present invention "real-time" is intended to mean that the image data is acquired, processed, and transmitted from the photosensor of the visualization module at a high enough data rate and at a low enough time delay that when the data is displayed, objects presented in the visualization move smoothly without user-noticeable judder, latency or lag. For example, this may occur when new images are acquired, processed, and transmitted at a rate of at least about 30 frames per second (fps) and displayed at a rate of at least about 60 fps and when the combined processing of the video signal has no more than about 1/10th second of delay.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 4, from 1 to 4, from 1 to 5, from 2 to 4, from 2 to 6, from 4 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It should be appreciated that combinations of features disclosed in different embodiments are also included within the scope of the present inventions.

It is appreciated that certain features of the invention, which are, for clarity, described in the context of separate embodiments or example, may also be provided in combination in a single embodiment. Conversely, various features of the invention, which are, for brevity, described in the context of a single embodiment, example and/or option, may also be provided separately or in any suitable subcombination or as suitable in any other described embodiment, example or option of the invention. Certain features described in the context of various embodiments, examples and/or options are not to be considered essential features of those embodiments, unless the embodiment, example and/or option is inoperative without those elements.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A method for providing a user with a lesson for creating an object of the visual arts, the method comprising:
receiving information of at least one user-created intermediate artwork and/or assistive feature relating to an artwork;
analyzing the information of the at least one intermediate artwork and/or assistive feature; and
providing feedback on the at least one intermediate artwork and/or assistive feature.

2. The method of claim 1, wherein the providing of feedback includes:
inferring, based on the at least one intermediate artwork and/or assistive feature, a prospective artwork product; and
presenting the inferred prospective artwork product.

3. The method of claim1 and/or claim 2, comprising:
receiving information of an adapted intermediate artwork and/or assistive feature; and
providing, based on the adapted intermediate artwork and/or assistive feature, an updated feedback to the user.

4. The method of any one or more of the preceding claims, wherein the at least one intermediate artwork and/or assistive feature is produced in association with an intermediate stage of creating a final artwork.

5. The method of any one or more of the preceding claims, wherein the feedback pertains to the extent the at least one assistive feature is no longer visible in the final artwork and/or in a future intermediate and/or final artwork creation.

6. The method of any one or more of the preceding claims, comprising:
analyzing a plurality of intermediate stages for producing an artwork creation; and
providing a collective feedback on the plurality of intermediate stages.

7. The method of any one or more of the preceding claims, wherein the feedback is provided independent of target reference artwork information.

8. A system for providing a user with a lesson for creating an object of the visual arts, the system comprising:
at least one processor; and
at least one memory configured to store data and software code portions executable by the at least one processor to allow the execution of the following:
receiving information of at least one user-created intermediate artwork and/or assistive feature relating to an artwork;
analyzing the information of the at least one intermediate artwork and/or assistive feature; and
providing feedback on the at least one intermediate artwork and/or assistive feature.

9. The system of claim 8, wherein the providing of feedback includes:
inferring, based on the at least one intermediate artwork and/or assistive feature, a prospective artwork product; and
presenting the inferred prospective artwork product.

10. The system of claim 8 and/or claim 9, further configured to execute the following steps:
receiving an adapted intermediate artwork and/or assistive feature; and
providing, based on the adapted intermediate artwork and/or assistive feature, an updated feedback to the user.

11. The system of any one or more of the claims 8 to 10,
wherein the at least one intermediate artwork and/or assistive feature is produced in association with an intermediate stage of creating a final artwork.

12. The system of any one or more of the claims 8 to 11,
wherein the feedback pertains to the extent the at least one assistive feature is no longer visible in the final artwork.

13. The system of claim 12, wherein lesser visibility of the at least one assistive feature is associated with greater user skill level.

14. The system of any one or more of the claims 8 to 13, comprising:
analyzing a plurality of intermediate stages for producing an artwork creation; and
providing a collective feedback on the plurality of intermediate stages.

15. The system of any one or more of the claims 8 to 14, wherein the feedback is provided independent of target reference artwork information.
